# EUROPÄISCHE PATENTSCHRIFT

(11) **EP 0 597 197 B1**
(45) Veröffentlichungstag und Bekanntmachung des Hinweises auf die Patenterteilung: **22.07.1998**
(21) Anmeldenummer: 93113356.5
(22) Anmeldetag: 20.08.1993
(51) Int. Cl.: G09G 1/16

(54) **Anordnung zur Erzeugung von Bildschirmsteuersignalen für am Bildschirm darstellbare Zeichen**
Control signal generator for displaying characters on a screen
Dispositif pour la génération de signaux de commande pour la visualisation de caractères sur un écran

(30) Priorität: 12.11.1992 EP 92119372
(43) Veröffentlichungstag der Anmeldung: 18.05.1994
(73) Patentinhaber: SIEMENS AKTIENGESELLSCHAFT, 80333 München (DE)
(72) Erfinder: Langenkamp, Ulrich, D-85521 Ottobrunn (DE)

(56) Entgegenhaltungen:
- EP-A- 0 393 313
- EP-A- 0 414 597
- US-A- 4 306 250

## Beschreibung

Die Erfindung betrifft eine Anordnung zur Erzeugung von Bildschirmsteuersignalen für am Bildschirm darstellbare Zeichen mit einer Einrichtung der die Zeichen zugeführt werden und die Daten für Bildpunkte, die Zeilen zugeordnet sind, erzeugt, und mit einem Ausgangswandler, der aus den Daten für die Bildpunkte die Bildschirmsteuersignale erzeugt.

Eine solche Anordnung ist beispielsweise aus der Produktveröffentlichung der Siemens AG "ICs for Entertainment Electronics", Version 4.92, Seiten 19 bis 30 bekannt. Diese Anordnung ist in einem Teletextprozessor enthalten, durch den RGB-Signale erzeugt werden, um Zeichen am Bildschirm eines Fernsehgerätes darzustellen. Die Zeichen werden aus einer Quelle digitaler Daten entnommen, die vorzugsweise die aus dem Videosignal abgetrennten Teletextdaten sind.

Der beschriebene Teletextprozessor ist zur Ansteuerung von Bildschirmen im Format 4:3 konzipiert. Heutzutage werden auch Bildröhren des Formats 16:9 verwendet. Die Ansteuerung solcher Bildröhren ist mit der eingangs genannten Anordnung nicht ohne weiteres möglich.

In der Europäischen Anmeldung EP-A-0 414 597 ist ein Verfahren beschrieben zum Einfügen einer zusätzlichen Videoinformation zu einem Hauptbild mit dem Format 4:3 auf einer Fernsehbildröhre mit dem Format 16:9, bei dem ein FIFO-Speicher benützt wird. Beschreiben und Auslesen des Speichers erfolgt dabei mit unterschiedlichen Frequenzen.

Die Aufgabe der vorliegenden Erfindung ist es, eine Anordnung der eingangs genannten Art derart weiterzubilden, daß die Ansteuerung von Bildschirmen verschiedenen Formats wahlweise möglich ist.

Diese Aufgabe wird dadurch gelöst, daß die Ausgangswandlereinrichtung einen Speicher mit first-in-first-out-Betriebsweise enthält, dem die Daten für die Bildpunkte zugeführt werden, und eine wahlweise dem Speicher oder der Einrichtung ausgangsseitig nachschaltbare Digital-Analog-Wandlereinrichtung, daß die Einrichtung und eingangsseitig der Speicher von einem ersten Taktsignal gesteuert werden, daß die Digital-Analog-Wandlereinrichtung und ausgangsseitig der Speicher von einem zweiten Taktsignal gesteuert werden, daß das erste und das zweite Taktsignal phasengekoppelt sind, und daß das zweite Taktsignal zwischen einer ersten und einer zweiten Taktfrequenz umschaltbar ist.

Des weiteren wird diese Aufgabe durch Verfahren zur Verwendung der Anordnung in einer Teletextverarbeitungseinrichtung oder einem Fernsehgerät gelöst.

Durch die erfindungsgemäße Anordnung ist es möglich, Zeichen für unterschiedliche Bildschirmformate ohne Verzerrung in gleicher Qualität auszugeben. Die Umschaltung im Hinblick auf die entsprechende Taktsignalsteuerung für das jeweilige Ausgabeformat ist erst an einer relativ späten Stelle des Signalverarbeitungsablaufs notwendig. Der Umfang von Schaltungseinheiten, die mit höherer Taktfrequenz arbeiten, bleibt deshalb begrenzt. Bei Realisierung als integrierte Schaltung in CMOS-Technologie wird somit Verlustleistung eingespart.

Vorteilhafte Weiterbildungen sind Gegenstand von den abhängigen Ansprüchen.

Durch geeignete Steuerung des Speichers mit first-in-first-out-Organisation kann erreicht werden, daß die zu einer Zeile gehörenden Bildpunktdaten mit höherer Geschwindigkeit aus dem Speicher bereits ausgelesen werden, während gleichzeitig noch Daten darzustellender Bildpunkte der gleichen Zeile in den Speicher eingelesen werden. Bei einer Anordnung, die speziell für die Bildschirmformate 4:3 und 16:9 ausgelegt ist, ist eine Speicherkapazität von nur etwa einem Drittel der zu einer Bildschirmzeile gehörenden Bildpunktdaten notwendig. Außerdem kann vorgesehen werden, daß beim Auslesen aus dem Speicher die Bildpunktdaten für mindestens den ersten und/oder mindestens den letzten Bildpunkt einer Zeile wiederholt ausgelesen werden. Auf diese Weise kann ein Rahmen an der Seite des Darstellungsbereichs erzeugt werden.

Nachfolgend wird die Erfindung unter Bezugnahme auf die in der Zeichnung dargestellten Figuren eingehend erläutert. Es zeigen
- FIG 1: ein Blockdiagramm einer erfindungsgemäßen Anordnung und
- FIG 2: ein Bildpunktindexdiagramm für den FIFO-Speicher.

Eine erfindungsgemäße Anordnung kann beispielsweise in einem Fernsehgerät verwendet werden. Die Ausgangssignale der Anordnung steuern eine Bildröhre zur Modulation des Elektronenstrahls. Der Anordnung werden darzustellende Zeichen zugeführt, die beispielsweise alphanummerische Zeichen oder Teilabschnitte einer Graphik zusammen mit Farbinformation, z. B Vordergrund- und Hintergrundfarbe, und eventuell weiteren Darstellungsattributen sein können. Darüber hinaus kann die Anordnung in allen Geräten verwendet werden, die in Zeilen aufgeteilte Videosignale verarbeiten.

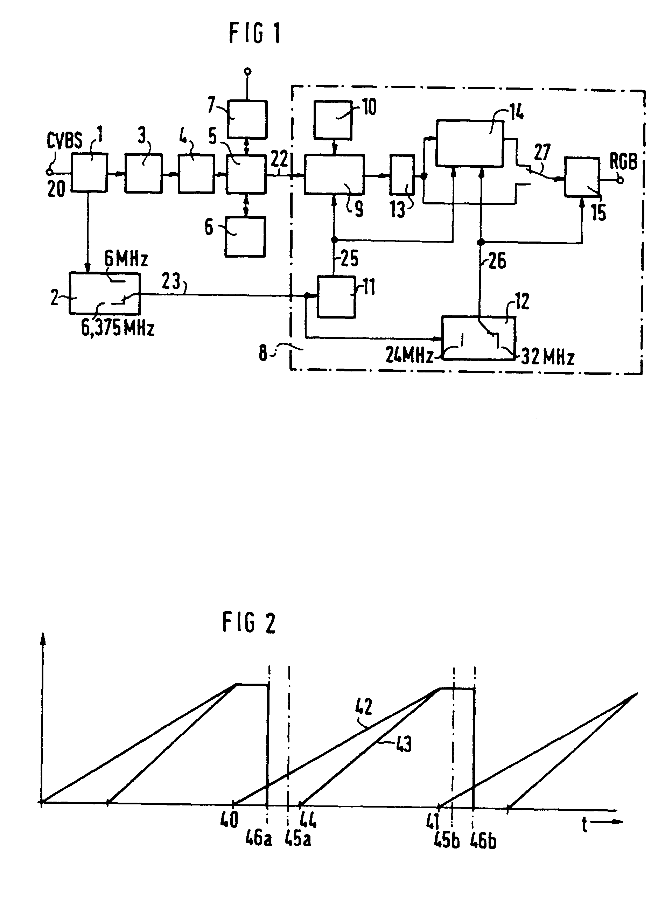

Im Ausführungsbeispiel ist die in FIG 1 gezeigte Anordnung 8 ein Teil eines Teletextprozessors. Durch den Teletextprozessor werden in einem Videosignal CVBS enthaltene Teletextdaten abgetrennt, intern aufbereitet und zu Bildschirmsteuersignalen RGB umgesetzt, wobei Bildröhren des Formats 4:3 sowie 16:9 ansteuerbar sind.

Im Detail wird hierzu das Videosignal CVBS dem Teletextprozessor an einem Anschluß 20 zugeführt. Nach Analog-Digital-Wandlung im Wandler 1 werden die Teletextdaten aus dem Videosignal in einem Datenslicer 3 gewonnen und über eine Schnittstelleneinrichtung 4 formatrichtig aquiriert. Ein Rechnerkern 5 steuert den Datenfluß. Diesem können sowohl die von der Einrichtung 4 bereitgestellten Daten als auch über eine digitale Schnittstelle (z. B. I2C, M3L) zugeführte darzustellende Daten und Steuerungsbefehle als auch in einem RAM-Speicher 6 zwischengespeicherte darzustellende Daten, Steuerungs- oder Programmbefehle eingespeist werden. Zur Taktsteuerung der gesamten Schaltung werden in einem digitalen Horizontalphasenregelkreis 2 aus dem Videosignal CVBS Taktsignale erzeugt, die zeilen- und bildgekoppelt sind.

Die erfindungsgemäße Anordnung 8 wird über einen Ausgang 22 des Rechnerkerns 5 mit Daten für darzustellende Zeichen und über einen Ausgang 23 des Takterzeugers 2 mit einem Taktsignal versorgt. Die darzustellenden Zeichen werden in einem Displaygenerator 9 in Daten für Bildpunkte, die zeilenweise aufgeteilt sind, umgesetzt. Hierzu enthält der Displaygenerator 9 aus einem Speicher 10 die Bildpunktinformation für ein darzustellendes Zeichen. Dem Displaygenerator 9 ist ausgangsseitig ein Farbdatenspeicher 13 nachgeschaltet. Um die zu verarbeitende Datenmenge zu begrenzen, ist dort eine Auswahl aus den möglichen darstellbaren Farbabstufungen gespeichert. Im Farbspeicher 13 wird die durch den Displaygenerator 9 einem Bildpunkt zugeordnete Farbe in entsprechende Steuersignale für den Luminanzanteil der Bildschirmansteuerung umgesetzt.

Zur Anpassung des Bildpunktdatenstroms an das Format der Bildröhre sind die nachfolgend beschriebenen Schaltungsblöcke vorgesehen. Für das Format 4:3 wird der am Farbspeicher 13 ausgangsseitig vorliegende Datenstrom direkt in einen Digital-Analog-Wandler 15 eingespeist, dessen Ausgang 21 die RGB-Signale führt. Zur Ansteuerung von Bildröhren des Formats 16:9 ist zwischen dem Farbspeicher 13 und dem Digital-Analog-Wandler 15 ein Speicher 14 mit first-in-first-out-Organisation (FIFO) geschaltet. Ein Umschalter 27 dient zur Einstellung des jeweiligen Datenpfads. Eingangsseitig ist der FIFO-Speicher 14 mit einer niedrigen, dem Format 4:3 entprechenden Frequenz getaktet, zum Auslesen wird der FIFO-Speicher 14 mit einer höheren, dem Format 16:9 entsprechenden Taktfrequenz gesteuert. Zur Taktsteuerung der Schaltungsblöcke der Einrichtung 8 sind zwei Takterzeugungseinrichtungen 11, 12 vorgesehen. Zweckmäßigerweise enthalten die Einrichtungen 11, 12 je einen Phasenregelkreis (PLL). Die PLLs 11, 12 sind phasenstarr gekoppelt, was zweckmäßigerweise dadurch erreicht wird, daß die PLLs 11, 12 von demselben Referenzsignal gespeist werden. Der Phasenregelkreis 11 erzeugt das Taktsignal für den Displaygenerator 9 und die Eingangsseite des FIFO-Speichers 14. Der Phasenregelkreis 12 erzeugt das Taktsignal für die Ausgangsseite des FIFO-Speichers 14 und den Digital-Analog-Wandler 15.

Zweckmäßigerweise werden für RGB-Ausgangssignale im Format 4:3 die PLLs 11, 12 von einem Referenzsignal mit 6 MHz gesteuert. Der Regelkreis des PLL 11 enthält intern einen Teiler durch 4, so daß die Ausgangsfrequenz an dessen mit dem Bezugszeichen 25 bezeichneten Ausgang 24 MHz beträgt. Der PLL 12 ist bezüglich seiner Ausgangsfrequenz umschaltbar. Im betrachteten Fall ist der in PLL 12 enthaltende Teiler auf ein Teilerverhältnis 1:4 programmiert, so daß an dessen Ausgang 26 ebenfalls 24 MHz Taktfrequenz vorliegen.

Für RGB-Ausgangssignale im Format 16:9 werden die PLLs 11, 12 zweckmäßigerweise mit einem Referenzsignal von 6,375 MHz versorgt. Der Ausgang 25 des PLL 11 liefert dann 25,5 MHz Taktfrequenz. Der Teiler des PLL 12 wird auf ein Teilerverhältnis 1:5 programmiert, so daß die Ausgangsfrequenz an dessen Ausgang 26 in etwa 32 MHz, also die Bildpunktfrequenz für einen Bildschirm mit Format 16:9, beträgt. Durch einen umschaltbaren Referenztakt wird erreicht, daß das Teilerverhältnis der PLLs 11, 12 geradzahlig ist und somit einfach realisiert werden kann.

Nachfolgend wird der Datenfluß in Hinblick auf den FIFO-Speicher 14 im Zusammenhang mit der FIG 2 für das Bildschirmformat 16:9 näher beschrieben. Das Diagramm der FIG 2 zeigt zwischen den Zeitpunkten 40, 41 anhand der Kurven 42, 43 das Einschreiben bzw. Auslesen der Bildpunkte einer Zeile am FIFO-Speicher 14. Längs der Ordinate ist die Anzahl der geschriebenen bzw. gelesenen Bildpunkte einer Zeile aufgetragen. Das Einschreiben in den FIFO-Speichern gemäß der Kurve 42 erfolgt wie oben angegeben mit 25,5 MHz. Das Auslesen gemäß Kurve 43 wird mit etwa 32 MHz zwischen den Zeitpunkt 44, 41 durchgeführt. Zwischen den Zeitpunkten 40, 44 wird das erste Drittel der zu einer Zeile gehörenden Bildpunkte in den FIFO-Speicher eingeschrieben. Vor dem Beginn des Schreibens des zum nächsten Drittel gehörenden Bildpunktes wird zum Zeitpunkt 44 der erste Bildpunkt des ersten Drittels ausgelesen. Durch eine dies ausführende, hinreichend bekannte Steuerung der Adreßzählung des FIFO-Speichers wird erreicht, daß die Speichertiefe des FIFO-Speichers nur etwa ein Drittel der Gesamtanzahl der zu einer Zeile gehörenden Bildpunkte beträgt. Das Auslesen von den zu einer Zeile gehörenden Bildpunktdaten endet unmittelbar nach dem Einschreiben der zur gleichen Zeile gehörenden Daten. Dabei muß gewährleistet sein, daß Daten von Bildpunkten einer nachfolgenden Zeile erst dann eingeschrieben werden, wenn die Daten der letzten Zeile bereits vollständig ausgelesen sind.

Es ist weiterhin vorteilhaft, die Adreßsteuerung des FIFO-Speichers derart auszugestalten, daß der erste Bildpunkt und/oder der letzte Bildpunkt einer Bildschirmzeile unmittelbar aufeinanderfolgend wiederholt ausgelesen werden. Dadurch wird erreicht, daß die Darstellung am Bildschirm mit einem Rand versehen wird. Ein durch Justierungsungenauigkeiten möglicher Informationsverlust bei der Darstellung am Bildschirm wird dadurch vermieden. Alternativ dazu kann auch vorgesehen werden, daß mehr als ein Bildpunkt, z.B. ein gesamtes Zeichen, am Anfang bzw. Ende einer Bildschirmzeile wiederholt ausgelesen werden. Somit kann anstelle eines uniformen Randes ein Randmuster erzeugt werden. Gemäß Fig. 2 wird dieses Randmuster durch mehrmaliges Auslesen entsprechender Bildpunkte am Anfang und Ende einer Zeile aus dem FIFO-Speicher 14 zwischen den Zeitpunkten 45a, 44 bzw. 41, 45b durchgeführt. Die zwischen den Zeitpunkten 45a, 44 bzw. 41, 45b durchgeführt. Die zwischen den Zeitpunkten 46a, 46b liegende Zeitdauer entspricht einer Horizontalperiode.

Bei RGB-Ausgangssignalen im Format 16:9 ist nur der Ausgangsteil des FIFO-Speichers 14 und der Digital-Analog-Wandler 15 mit der erhöhten Taktfrequenz (32 MHz) zu takten. Der Rest der Schaltung läuft mit der niedrigeren Taktfrequenz (25,5 MHz). Deshalb muß nur der Ausgangsteil des FIFO-Speichers 14, der Digital-Analog-Wandler 15 sowie ein vergleichsweise kleiner Schaltungsteil des PLL 12 für den Betrieb mit der höheren Taktfrequenz ausgelegt werden. Bei Realisierung in CMOS-Schaltungstechnik, bei der die Verlustleistung proportional zur Taktfrequenz ist, ergibt sich eine Verlustleistung sparende Realisierung. Die Farbnachschlagetabelle 13 kann entweder unmittelbar nach dem Displaygenerator 9 oder unmittelbar vor dem Digital-Analog-Wandler 15 angeordnet werden. Im ersten Fall ist vorteilhaft, daß die Farbnachschlagetabelle 13 mit niedriger Taktfrequenz läuft. Im zweiten Fall ist vorteilhaft, daß der FIFO-Speicher 14 für eine geringere Wortbreite dimensioniert werden kann, da dort nur eine Farbkennung, nicht aber die Farbabstufung für die einzelnen RGB-Signale gespeichert werden muß.

## Patentansprüche

1. Anordnung zur Erzeugung von Bildschirmsteuersignalen für am Bildschirm darstellbare Zeichen mit einer Einrichtung zur erzeugung von Daten für Bildpunkte, die Zeilen zugeordnet sind, (9), der die Zeichen zuführbar sind und mit einer Ausgangswandlereinrichtung, zur Erzeugung von Bildschirmsteuersignalen aus den Daten für die Bildpunkte **dadurch gekennzeichnet,**
daß die Ausgangswandlereinrichtung einen Speicher (14) mit first-in-first-out-Betriebsweise enthält, dem die Daten für die Bildpunkte zuführbar sind, und eine wahlweise dem Speicher (14) oder der Einrichtung (9) ausgangsseitig nachschaltbare Digital-Analog-Wandlereinrichtung (15), daß Mittel zur Erzeugung eines ersten und eines zweiten phasen gekoppelten Taktsignals vorhanden sind, und so gestaltet sind, daß die Einrichtung (9) und eingangsseitig der Speicher (14) von dem ersten Taktsignal gesteuert werden, und die Digital-Analog-Wandlereinrichtung (15) und ausgangsseitig der Speicher (14) von dem zweiten Taktsignal gesteuert werden, und daß die Mittel zur Erzeugung der Taktsignale einen Umschalter enthalten, mit dem das zweite Taktsignal zwischen einer ersten und einer zweiten Taktfrequenz umschaltbar ist.

2. Anordnung nach Anspruch 1,
**dadurch gekennzeichnet,**
daß Mittel zur Steuerung des Speichers (14) vorgesehen sind, mit denen das Auslesen der Daten der zu einer Zeile gehörenden Bildpunkte aus dem Speicher während des Zeitraums des Speicherns der Daten der zu der gleichen Zeile gehörenden Bildpunkte durchgeführt wird.

3. Anordnung nach Anspruch 2,
**dadurch gekennzeichnet**,
daß die Mittel derart ausgeführt ist, daß das Auslesen zu einem solchen Zeitpunkt (44) gestartet wird, daß das Einspeichern und das Auslesen der Daten von zu derselben Zeile gehörenden Bildpunkten beendet wird, bevor die Daten von zu einer nachfolgenden Zeile gehörenden Bildpunkten gespeichert werden.

4. Anordnung nach Anspruch 2 oder 3,
**dadurch gekennzeichnet,**
daß weitere Mittel zur Steuerung des Speichers (14) vorgesehen sind, mit denen die Daten mindestens des ersten der zu einer Zeile gehörenden Bildpunkte und die Daten mindestens des letzten der zu einer Zeile gehörenden Bildpunkte jeweils mindestens zwei Mal ausgelesen werden.

5. Anordnung nach Anspruch 1 bis 4,
**dadurch gekennzeichnet,**
daß die Ausgangswandlereinrichtung einen Farbdatenspeicher (13) enthält, der in den Signalpfad zwischen die Einrichtung (9) und die Digital-Analog-Wandlereinrichtung (15) geschaltet ist.

6. Anordnung nach einem der Ansprüche 1 bis 5,
**gekennzeichnet** durch je eine Takterzeugungseinrichtung (11 bzw. 12) für je eines der Taktsignale, die jeweils einen Phasenregelkreis, die eingangsseitig von gekoppelten Referenzsignalen gesteuert werden, enthalten.

7. Anordnung nach Anspruch 6,
**dadurch gekennzeichnet,**
daß der Phasenregelkreis der zweiten Takterzeugungseinrichtung (12) einen Teiler enthält, dessen Teilungsverhältnis zur Einstellung der ersten und zweiten Taktfrequenz des zweiten Taktsignals programmierbar ist.

8. Verwendung einer Anordnung nach einem der Ansprüche 1 bis 7 in einer Teletextverarbeitungseinrichtung, bei der aus einem Videosignal abgetrennte Teletextzeichen der Anordnung zugeführt werden.

9. Verwendung einer Anordnung nach einem der Ansprüche 1 bis 7 in einem Fernsehgerät zur Ansteuerung der Bildröhre.

## Claims

1. Arrangement for generating screen control signals for characters which can be displayed on a screen, having a device (9) for generating data for pixels which are assigned to lines, to which device the characters can be fed, and having an output converter device for generating screen control signals from the data for the pixels,
characterized in that the output converter device contains a memory (14) having the first-in first-out method of operation, to which memory the data for the pixels can be fed, and a digital-to-analog converter device (15), which can optionally be connected downstream, on the output side, of the memory (14) or of the device (9), in that means for generating a first and a second phase-coupled clock signal are present and are configured in such a way that the device (9) and, on the input side, the memory (14) are controlled by the first clock signal, and the digital-to-analog converter device (15) and, on the output side, the memory (14) are controlled by the second clock signal, and in that the means for generating the clock signals contain a changeover switch by which the second clock signal can be changed over between a first and a second clock frequency.

2. Arrangement according to Claim 1,
characterized in that means for controlling the memory (14) are provided, by which means the read-out of the data of the pixels belonging to a line from the memory is carried out during the period of time for storing the data of the pixels belonging to the same line.

3. Arrangement according to Claim 2,
characterized in that the means are designed in such a way that the read-out is started at an instant (44) such that the storage and the read-out of the data of pixels belonging to the same line are ended before the data of pixels belonging to a succeeding line are stored.

4. Arrangement according to Claim 2 or 3,
characterized in that further means for controlling the memory (14) are provided, by which means the data at least of the first of the pixels belonging to a line and the data at least of the last of the pixels belonging to a line are read out in each case at least twice.

5. Arrangement according to Claims 1 to 4,
characterized in that the output converter device contains a colour data memory (13), which is connected into the signal path between the device (9) and the digital-to-analog converter device (15).

6. Arrangement according to one of Claims 1 to 5,
characterized by a respective clock generation device (11 or 12) for each of the clock signals, which devices each contain a phase-locked loop, and these phase-locked loops are controlled by coupled reference signals on the input side.

7. Arrangement according to Claim 6,
characterized in that the phase-locked loop of the second clock generation device (12) contains a divider whose division ratio can be programmed for the purpose of setting the first and second clock frequencies of the second clock signal.

8. Use of an arrangement according to one of Claims 1 to 7 in a teletext processing device, in which teletext characters separated from a video signal are fed to the arrangement.

9. Use of an arrangement according to one of Claims 1 to 7 in a television set for driving the picture tube.

## Revendications

1. Dispositif de génération de signaux de commande pour la visualisation de caractères sur un écran, comprenant un dispositif (9) pour générer des données de points d'image associés à des lignes, auquel les caractères peuvent être acheminés, et comprenant un dispositif convertisseur de sortie pour générer des signaux de commande d'écran à partir des données des points d'image, caractérisé en ce que le dispositif convertisseur de sortie comporte une mémoire (14) fonctionnant en mode First In First Out, à laquelle les données des points d'image peuvent être acheminées, et un dispositif convertisseur numérique-analogique (15) pouvant être monté, côté sortie, à la suite, soit à la mémoire (14) soit au dispositif (9), en ce que des moyens pour générer un premier et un deuxième signal de synchronisation couplé en phase sont prévus et réalisés de telle sorte que le dispositif (9) et, côté entrée, la mémoire (14) sont commandés par le premier signal de synchronisation et le dispositif convertisseur numérique-analogique (15) et, côté sortie, la mémoire (14) par le deuxième signal de synchronisation, et en ce que les moyens pour générer les signaux de synchronisation comportent un commutateur, grâce auquel le deuxième signal de synchronisation peut être commuté entre une première et une deuxième fréquence de synchronisation.

2. Dispositif selon la revendication 1, caractérisé en ce que des moyens pour commander la mémoire (14) sont prévus, grâce auxquels on effectue la lecture des données des points d'image appartenant à une ligne à partir de la mémoire pendant la période de l'enregistrement des données des points d'image appartenant à la même ligne.

3. Dispositif selon la revendication 2, caractérisé en ce que les moyens sont effectués de manière à lancer la lecture à un instant (44) de façon à ce que l'enregistrement et la lecture des données des points d'image appartenant à la même ligne soient terminées avant que les données des points d'image appartenant à une ligne suivante ne soient enregistrées.

4. Dispositif selon la revendication 2 ou 3, caractérisé en ce que d'autres moyens pour commander la mémoire (14) sont prévus, gràce auxquels on peut lire les données au moins du premier des points d'image appartenant à une ligne et les données au moins du dernier des points d'image appartenant à une ligne respectivement au moins deux fois.

5. Dispositif selon la revendication 1 à 4, caractérisé en ce que le dispositif convertisseur de sortie comporte une mémoire de données couleur (13) qui est montée dans le chemin de signal entre le dispositif (9) et le dispositif convertisseur numérique-analogique (15).

6. Dispositif selon l'une des revendications 1 à 5, caractérisé par respectivement un dispositif générateur de synchronisation (11 ou 12) pour respectivement un des signaux de synchronisation, qui comportent chacun un circuit de régulation de phase commandé côté entrée par des signaux de référence couplés.

7. Dispositif selon la revendication 6, caractérisé en ce que le circuit de régulation de phase du deuxième dispositif générateur de synchronisation (12) comporte un diviseur dont le rapport de division pour régler la première et la deuxième fréquence de synchronisation du deuxième signal de synchronisation est programmable.

8. Utilisation d'un dispositif selon l'une des revendications 1 à 7 dans un dispositif de traitement de télétexte, dans laquelle les caractères de télétexte séparés d'un signal vidéo peuvent être acheminés au dispositif.

9. Utilisation d'un dispositif selon l'une des revendications 1 à 7 dans un téléviseur, pour commander le tube image.
